# FASCICULE DE BREVET EUROPEEN

(11) **EP 2 325 603 B1**
(45) Date de publication et mention de la délivrance du brevet: **23.05.2018**
(21) Numéro de dépôt: 09176366.4
(22) Date de dépôt: 18.11.2009
(51) Int. Cl.: G01C 13/00, G04B 47/06

(54) **Profondimètre capillaire a fort contraste et montre comportant un tel profondimètre**
Kapillarer Tiefenmesser mit starkem Kontrast und mit einem solchen Tiefenmesser ausgestattete Armbanduhr
High-contrast capillary depth gauge and watch comprising such a depth gauge

(43) Date de publication de la demande: 25.05.2011
(73) Titulaire: The Swatch Group Research and Development Ltd., 2074 Marin (CH)
(72) Inventeur: Rebeaud, Nicolas, 1052, Le Mont-sur-Lausanne (CH); Sagardoyburu, Michel, 2087, Cornaux (CH)
(74) Mandataire: Surmely, Gérard

(56) Documents cités:
- GB-A- 919 953
- US-A- 4 098 110
- US-A- 4 350 042
- JOHN KNIGHT, CHRISTOPHER J ACOTT: "Depth gauges, contents gauges and miscellaneous equipment problemsreported in the Diving Incident Monitoring Study" SOUTH PACIFIC UNDERWATER MEDICINE SOCIETY (SPUMS) JOURNAL, vol. 33, mars 2003 (2003-03), pages 34-37, XP002583662

## Description

### DOMAINE TECHNIQUE DE L'INVENTION

L'invention concerne un profondimètre à capillaire comprenant au moins un tube capillaire de section triangulaire disposé contre un fond opposé à une face d'observation et visible par transparence depuis la face d'observation lorsque la section tubulaire est sensiblement remplie d'eau, et au moins une face de réflexion. L'invention concerne également une montre comportant un tel profondimètre.

### ETAT DE LA TECHNIQUE ANTERIEURE

Les profondimètres sont des dispositifs fortement répandus dans certains types d'utilisation, comme par exemple pour la plongée sous-marine. Plusieurs types de dispositifs existent. Parmi ceux-ci, les profondimètres à capillaires sont bien connus.

Un profondimètre à capillaire classique comporte un tube en verre fermé à une extrémité. Lorsqu'il est plongé dans l'eau, l'air reste emprisonné dans le tube, du côté fermé. L'eau pénètre par l'ouverture et compresse l'air. En fonction de la profondeur qui augmente, la pression exercée sur la zone d'air emprisonnée augmente. Cet effet est utilisé pour afficher la profondeur atteinte, à l'aide d'une graduation prévue au voisinage immédiat du profondimètre ou directement sur ce dernier. Ainsi, lors d'une utilisation en plongée sous-marine, lorsqu'un plongeur s'éloigne de la surface de l'eau, l'air se comprime et on peut mesurer la profondeur en fonction de la position de la zone de transition air-eau dans le tube.

La lecture de ce type de profondimètre est souvent difficile car le contraste entre l'air (gaz transparent) et l'eau (liquide transparent) est faible. La variation de l'indice de réfraction en fonction de la présence d'eau dans le capillaire se traduit par une variation de l'indice de réflexion. C'est cette inégalité de coefficient de réflexion qui caractérise le contraste. Pour améliorer le contraste, on peut donner une forme particulière au tube capillaire. Par exemple, on peut substituer le profil rond par un profil de forme triangulaire. Lorsque le tube est plein d'air, dans certaines conditions d'angles d'incidence, la différence d'indice de réfraction entre l'air et le matériau du capillaire produit une réflexion totale de la lumière. Cette réflexion totale est utilisée pour réfléchir une image de ce qui se trouve sur le coté du capillaire, comme un fond blanc, des caractères ou une graduation. Lorsque le tube est plein d'eau, la différence d'indice entre l'eau et le matériau du capillaire est faible ou nulle. Il n'y a plus de réflexion totale de la lumière. La lumière passe à travers le tube capillaire et l'eau. Le fond du capillaire devient alors visible. Si un fond de coloration intense est prévu, par exemple un fond noir, ce fond devient bien visible. Ce type de solution correspond au profondimètre décrit dans le document GB919953.

Avec cette solution, des gouttes d'eau se forment dans le tube capillaire, car la différence de pression due à l'effet capillaire à l'interface air-eau n'est pas uniforme. Le profondimètre décrit dans ce document procure donc une lisibilité limitée. L'effet optique obtenu ne permet pas une lecture aisée et précise.

On connait également du document US 4,350,042 un intégrateur temps-profondeur pour indiquer quand un plongeur approche ou a atteint la limite de sécurité maximum pour plonger sans nécessiter de procédure de décompression lors de la remontée, qui utilise un tube capillaire.

### EXPOSE DE L'INVENTION

Pour éviter de se retrouver dans un tel contexte, et notamment pour éviter la présence de gouttes d'eau à l'intérieur du capillaire ainsi que pour améliorer la lisibilité, l'invention prévoit différents moyens techniques.

Pour ce faire, l'invention prévoit un profondimètre à capillaire tel que défini à la revendication 1 du brevet.

Ces caractéristiques permettent d'améliorer la lisibilité d'un profondimètre à capillaire.

Selon un mode de réalisation avantageux, l'angle α a une valeur comprise entre 50 et 55 degrés. Ainsi, on donne une forme à la section du capillaire qui permet de répartir au mieux la pression tout en conservant des surfaces utilisables pour produire l'effet optique. En effet, une section triangulaire équilatérale ou proche permet à la fois de répartir les trois points de concentration de la pression (à savoir les coins) autour du centre du capillaire et de les placer à une distance sensiblement égale (ou très peu différente) les uns des autres.

Dans un autre mode de réalisation avantageux, l'angle α est sensiblement égal à 50 degrés. Cet angle procure un effet optique particulièrement efficace.

Selon un autre mode de réalisation avantageux, la face du tube la plus étroite (disposée de préférence contre le fond) a une largeur sensiblement inférieure à 1.5 mm. Au-delà de cette dimension, l'effet capillaire diminue, et les performances du profondimètre risquent fortement d'être dégradées.

Encore selon un autre mode de réalisation avantageux, le tube est disposé de façon à présenter deux côtés actifs visibles depuis la face d'observation. Cette variante est aisément obtenue si le fond et la face de réflexion forment un angle correspondant sensiblement à 90 degrés.

Selon un autre mode de réalisation avantageux, le tube capillaire est disposé de façon à présenter un seul côté actif visible depuis la face d'observation. Cette variante est aisément obtenue si le fond est sensiblement incliné, c'est-à-dire non perpendiculaire par rapport à la direction de visibilité d'un observateur. Par exemple, cette variante peut être obtenue grâce à un agencement dans lequel le fond et la face de réflexion forment un angle supérieur à 90 degrés et de préférence compris entre 100 et 120 degrés.

Enfin, selon un mode de réalisation avantageux, le profondimètre comprend une pluralité de tubes capillaires disposés côte à côte ou à proximité immédiate les uns des autres. Selon un tel mode de réalisation, on prévoit de préférence deux ou trois tubes, de façon à améliorer la lisibilité et assurer une durée de vie plus longue au cas où le bon fonctionnement d'un des tubes ne serait plus assuré. Par exemple, un tube peut être obstrué par un dépôt.

L'invention prévoit également une montre comportant un profondimètre tel que préalablement décrit. Selon un mode de réalisation avantageux, le profondimètre est agencé sur le pourtour du boîtier et possède une ouverture en communication fluidique avec le milieu ambiant.

### DESCRIPTION DES FIGURES

Tous les détails de réalisation sont donnés dans la description qui suit, complétée par les figures 1 à 8, présentées uniquement à des fins d'exemples non limitatifs, dans lesquelles des références identiques indiquent des éléments similaires, et dans lesquelles :
- la Figure 1 est une coupe transversale d'un profondimètre de l'art antérieur conçu avec un tube capillaire avec un profil en forme de triangle rectangle ;
- la Figure 2 est une coupe transversale d'un profondimètre selon un premier mode de réalisation de l'invention ;
- les Figures 3a et 3b présentent un exemple d'intégration d'un profondimètre dans un boîtier de montre ;
- la Figure 4 présente une vue en coupe agrandie de l'intégration du profondimètre de la figure 3 ;
- les Figures 5 et 6 montrent le fonctionnement d'une montre pourvue d'un profondimètre selon l'invention ;
- la Figure 7 est une coupe transversale d'un profondimètre selon un second mode de réalisation de l'invention ;
- la Figure 8 est une coupe transversale d'un profondimètre selon un troisième mode de réalisation de l'invention.

### DESCRIPTION DETAILLEE DE L'INVENTION

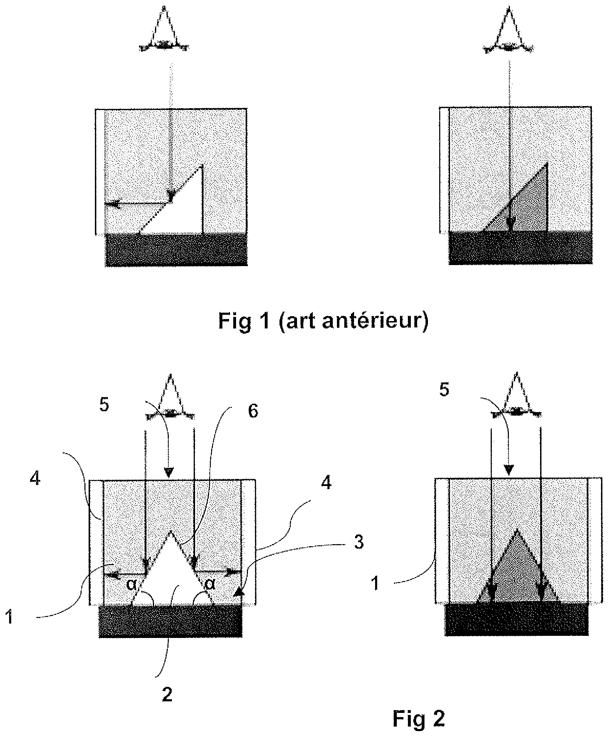

La figure 1 montre un profondimètre de type connu. Il comporte un tube capillaire dont le profil forme un triangle rectangle. Ce type d'agencement produit un effet de réflexion dans une direction orientée à sensiblement 90 degrés par rapport à la direction du regard d'un observateur lorsque le tube est rempli d'air, tel que montré dans la portion gauche de la figure 1. Au contraire, lorsque le tube capillaire est rempli d'eau, l'observateur peut apercevoir le fond du profondimètre car l'effet de réflexion à 90 degrés s'estompe. L'agencement utilisant un triangle rectangle confère une seule face visible ou accessible à partir du point de vision de l'utilisateur. Un tel agencement, avec un triangle rectangle, procure une lisibilité limitée.

La figure 2 illustre le principe de base d'un profondimètre 1 à tube capillaire 2 selon l'invention, conçu de façon à améliorer la visibilité et ainsi faciliter la lecture de la profondeur. Dans le cas d'une utilisation par un plongeur, il est important que la lecture de la profondeur puisse être fiable et précise afin d'assurer la sécurité de ce dernier, en particulier s'il doit effectuer des paliers lors de sa remontée vers la surface. Le tube capillaire 2 est conformé suivant un triangle isocèle avec deux angles α compris entre 50 et 55 degrés. Un mode de réalisation avantageux, avec un angle α à sensiblement 50 degrés confère un effet optique particulièrement avantageux. Le tube capillaire est posé contre un fond 3 prévu de façon à optimiser la visibilité depuis une face d'observation 5 sensiblement opposée audit fond. Au moins une, et de préférence deux faces de réflexion 4 sont prévues de chaque côté du tube capillaire 2. Dans l'exemple présenté à la figure 2, les faces sont agencées de façon à former un angle de sensiblement 90 degrés par rapport au fond 3. D'autres angles peuvent aussi être utilisés. Les faces de réflexion 4 sont formées par des rebords longitudinaux, cheminant le long du tube capillaire 2, de chaque côté de ce dernier. Selon diverses variantes de réalisation, les faces de réflexion sont pourvues de motifs, marquages, ou inscriptions prévues pour être vues par l'utilisateur.

Le triangle isocèle, du fait de la présence de deux côtés actifs 6 visibles depuis la face d'observation 5, procure un effet de réflexion totale interne qui est interrompu par la présence d'eau. Ainsi, tel que montré du côté gauche de la figure 2, lorsque le tube est en présence d'air, l'effet de réflexion se produit. L'utilisateur voit ce qui se trouve sur les faces de réflexion 4. En présence d'eau, tel que montré du côté droit de la figure 2, l'effet de réflexion cesse et l'utilisateur voit le fond 3 du tube capillaire.

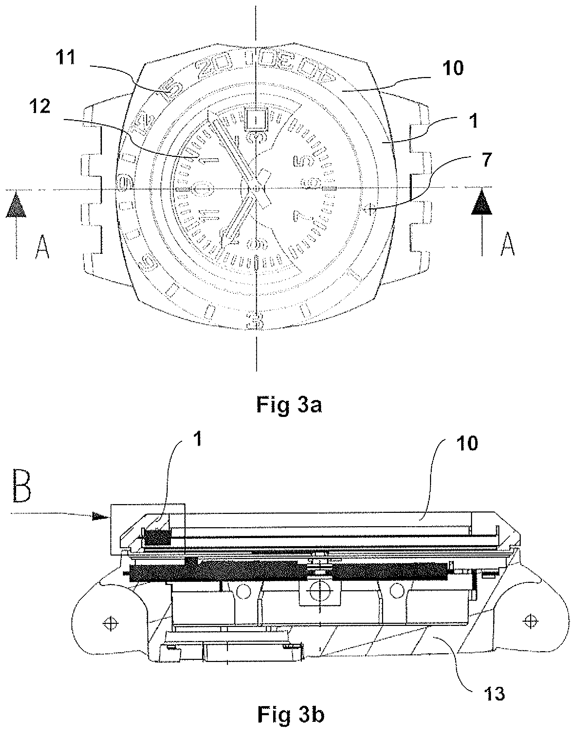

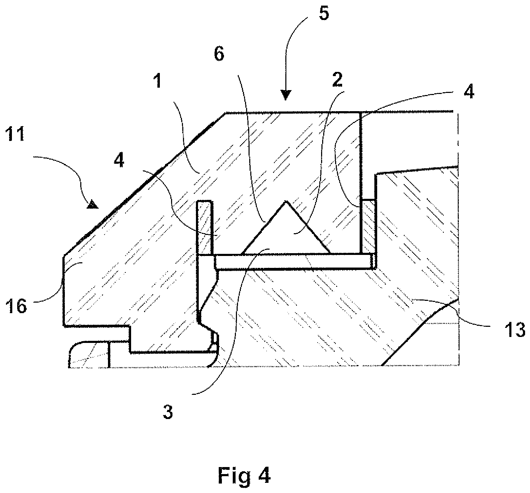

Les figures 3a et 3b illustrent un exemple d'intégration du profondimètre 1 dans une montre 10 pourvue d'un boîtier 13. Le profondimètre est agencé sur le pourtour du boîtier 13, en contournant les aiguilles et les chiffres indiquant l'heure. Une ouverture 7 du tube capillaire est prévue de façon à fournir une communication fluidique avec le milieu ambiant. Ainsi, lorsque la montre est immergée, l'eau peut pénétrer à l'intérieur du tube capillaire 2. La figure 3b est une coupe transversale du boîtier 13 et montre une zone B dans laquelle le profondimètre est intégré audit boîtier. Cette zone B est reprise en vue agrandie à la figure 4. Cette figure illustre le profondimètre 1 implanté dans le boîtier 13 avec le tube capillaire 2 posé sur le fond 3 entre deux faces de réflexion 4. L'ensemble de ces éléments est agencé dans une lunette 16 de verre ou de plastique ou autre matériau translucide elle-même ancrée sur le pourtour du boîtier.

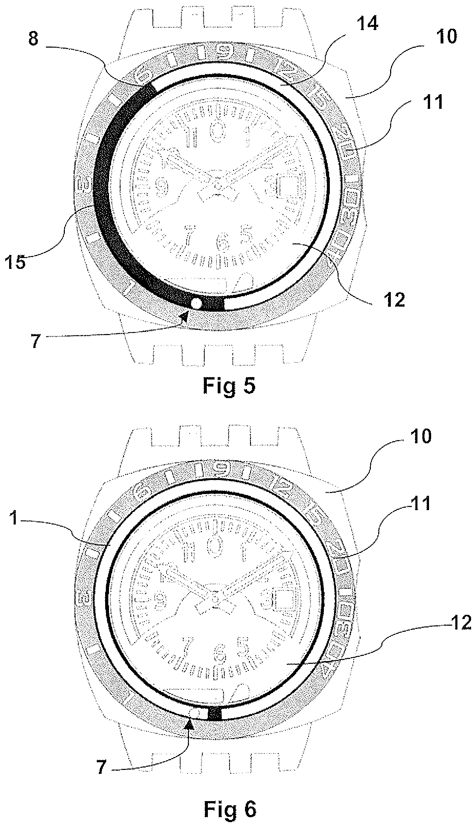

Les figures 5 et 6 illustrent le fonctionnement du profondimètre. A la figure 5, à 6 mètres de profondeur, la pression exercée par l'eau exerce une force suffisamment grande pour laisser entrer l'eau jusqu'à la graduation correspondant à 6. A cet endroit, l'interface eau/air 8 permet d'effectuer une lecture précise de la profondeur actuelle. La configuration triangulaire isocèle du tube capillaire contribue à former une interface eau/air 8 nette et stable. L'effet de réflexion totale préalablement décrit entraîne une délimitation du profondimètre entre deux secteurs, à savoir un secteur « air » 14, dans lequel le tube capillaire est rempli d'air, et un secteur « eau » 15, dans lequel le tube capillaire est rempli d'eau. Dans cet exemple de réalisation, le secteur « air » 14 permet de présenter à l'utilisateur les faces de réflexions 4 pourvues de colorations claires. A contrario, le secteur « eau » 15 permet à l'utilisateur de visualiser le fond 3 sombre du profondimètre. Les variations de profondeurs font varier l'importance du secteur « eau » 15 par rapport au secteur « air » 14, avec un secteur « eau » de plus en plus important en fonction de l'augmentation de la profondeur. Lorsque la profondeur diminue, le secteur « eau » se réduit, jusqu'à une configuration telle que celle présentée à la figure 6, dans laquelle la montre est à l'air libre. Une échelle 11 est graduée et calibrée de façon à indiquer la profondeur à laquelle la montre se trouve en temps sensiblement réel, en observant la position de l'interface eau/air 8 en regard de l'échelle.

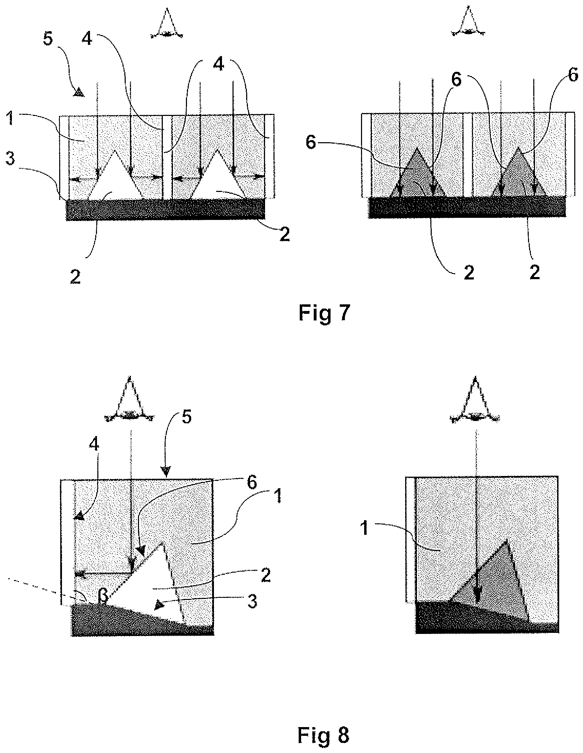

La figure 7 montre une variante de réalisation dans laquelle deux tubes capillaires 2 sont agencés côte à côte, de façon à former une double zone de lecture et ainsi faciliter la lecture de la profondeur, en particulier lorsque l'utilisateur se trouve en eaux plus profondes, où la visibilité est souvent réduite. Un tel agencement à deux ou plusieurs tubes capillaires disposés côte à côte permet également d'augmenter la robustesse de la mesure de profondeur. Ainsi, si un des capillaires ne fonctionne pas

La figure 8 montre une autre variante de réalisation dans laquelle le fond 3 est légèrement incliné afin d'augmenter la largeur visible par l'utilisateur d'un des côtés actifs 6. L'inclinaison cause une inhibition de l'effet de réflexion de l'autre côté du triangle. L'inclinaison du fond 3 est avantageusement prévue de façon à ce que l'angle β soit supérieur à 90 degrés, et de préférence compris entre 100 et 120 degrés. Ce type d'agencement avec fond incliné a pour effet d'améliorer l'effet optique en choisissant un angle d'inclinaison optimal pour un des côtés du capillaire.

Les Figures et leurs descriptions faites ci-dessus illustrent l'invention plutôt qu'elles ne la limitent. En particulier, l'invention et ses différentes variantes viennent d'être décrites en relation avec un exemple particulier comportant un profondimètre pourvu d'un tube capillaire circulaire, s'intégrant au pourtour d'un boîtier de montre. Néanmoins, il est évident pour un homme du métier que l'invention peut être étendue à d'autres modes de réalisation dans lesquels en variantes, on prévoit un ou plusieurs tubes capillaires ayant d'autres formes, par exemple linéaire, disposé sur un des côtés ou à la base de l'affichage d'une montre.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Profondimètre (1) à capillaire comprenant au moins un tube capillaire (2) de section triangulaire comportant au moins une portion réalisée en un matériau transparent, ledit tube étant disposé contre un fond (3) opposé à une face d'observation (5), ledit fond étant visible par transparence depuis la face d'observation lorsque la section tubulaire est sensiblement remplie d'eau, **caractérisé en ce qu'**il comprend au moins une face de réflexion (4) disposée à l'extérieur dudit tube, visible par réflexion depuis ladite face d'observation (5) lorsque la section tubulaire est sensiblement remplie d'air, **en ce que** ledit tube capillaire (2) forme un triangle isocèle dont les angles égaux (α) ont une valeur angulaire comprise entre 48 et 60 degrés, **en ce que** la base du triangle isocèle est disposée sur le fond, et **en ce que** ladite au moins une face de réflexion (4) est disposée en regard d'au moins un des deux côtés du triangle isocèle, et **en ce que** le triangle isocèle est agencé par rapport au fond pour que la lumière provenant des faces de réflexion (4) soit réfléchie depuis un coté du triangle isocèle vers l'observateur à l'interface entre la portion transparente du capillaire et l'intérieur dudit capillaire lorsque ledit capillaire est rempli d'air.

2. Profondimètre (1) à capillaire selon la revendication 1, dans lequel l'angle α a une valeur comprise entre 50 et 55 degrés.

3. Profondimètre (1) à capillaire selon la revendication 2, dans lequel l'angle α est égal à 50 degrés.

4. Profondimètre (1) à capillaire selon l'une des revendications 1 à 3, dans lequel la face du tube la plus étroite a une largeur sensiblement inférieure à 1.5 mm.

5. Profondimètre (1) à capillaire selon l'une des revendications 1 à 4, dans lequel le tube capillaire (2) est disposé de façon de présenter deux côtés (6) visibles depuis la face d'observation (5).

6. Profondimètre (1) à capillaire selon l'une des revendications 1 à 5, dans lequel le fond (3) et la face de réflexion (4) forment un angle correspondant sensiblement à 90 degrés.

7. Profondimètre (1) à capillaire selon l'une des revendications 1 à 4, dans lequel le tube capillaire (2) est disposé de façon à présenter un seul côté (6) visible depuis la face d'observation (5).

8. Profondimètre (1) à capillaire selon la revendication 7, dans lequel le fond (3) et la face de réflexion (4) forment un angle (β) compris entre 90 et 120°.

9. Profondimètre (1) à capillaire selon l'une des revendications précédentes, comprenant une pluralité de tubes capillaires disposés côte à côte.

10. Montre comportant un profondimètre (1) selon l'une des revendications 1 à 9.

11. Montre selon la revendication 10, dans laquelle le profondimètre est agencé sur le pourtour du boîtier (13) et possède une ouverture (7) en communication fluidique avec le milieu ambiant.

## Patentansprüche

1. Kapillar-Tiefenmesser (1), umfassend mindestens ein Kapillarrohr (2) mit dreieckigem Querschnitt, das mindestens einen aus einem transparenten Material hergestellten Abschnitt aufweist, wobei das Rohr auf einem Boden (3) gegenüber einer Betrachtungsfläche (5) angeordnet ist, wobei der Boden von der Betrachtungsfläche aus durchscheinend sichtbar ist, wenn der Rohrabschnitt im Wesentlichen mit Wasser gefüllt ist, **dadurch gekennzeichnet, dass** er mindestens eine außerhalb des Rohrs angeordnete Reflexionsfläche (4) umfasst, die durch Reflexion von der Betrachtungsfläche (5) aus sichtbar ist, wenn der rohrförmige Querschnitt im Wesentlichen mit Luft gefüllt ist, dass das Kapillarrohr (2) ein gleichschenkliges Dreieck bildet, dessen gleiche Winkel (α) einen Winkelwert im Bereich von 48 bis 60 Grad aufweisen, dass die Basis des gleichschenkligen Dreiecks auf dem Boden angeordnet ist, dass die mindestens eine Reflexionsfläche (4) gegenüber mindestens einer der beiden Seiten des gleichschenkligen Dreiecks angeordnet ist und dass das gleichschenklige Dreieck in Bezug auf den Boden so angeordnet ist, dass das Licht, das von den Reflexionsflächen (4) ausgeht, von einer Seite des gleichschenkligen Dreiecks über die Grenzfläche zwischen dem lichtdurchlässigen Abschnitt der Kapillare und dem Innenraum der Kapillare zu dem Betrachter reflektiert wird, wenn die Kapillare mit Luft gefüllt ist.

2. Kapillar-Tiefenmesser (1) nach Anspruch 1, wobei der Winkel α einen Wert im Bereich von 50 bis 55 Grad hat.

3. Kapillar-Tiefenmesser (1) nach Anspruch 2, wobei der Winkel α gleich 50 Grad ist.

4. Kapillar-Tiefenmesser (1) nach einem der Ansprüche 1 bis 3, wobei die schmalste Fläche des Rohrs eine Breite besitzt, die im Wesentlichen kleiner als 1,5 mm ist.

5. Kapillar-Tiefenmesser (1) nach einem der Ansprüche 1 bis 4, wobei das Kapillarrohr (2) in der Weise angeordnet ist, dass es zwei von der Betrachtungsfläche (5) aus sichtbare Seiten (6) aufweist.

6. Kapillar-Tiefenmesser (1) nach einem der Ansprüche 1 bis 5, wobei der Boden (3) und die Reflexionsfläche (4) einen Winkel bilden, der im Wesentlichen 90 Grad entspricht.

7. Kapillar-Tiefenmesser (1) nach einem der Ansprüche 1 bis 4, wobei das Kapillarrohr (2) in der Weise angeordnet ist, dass es nur eine von der Betrachtungsfläche (5) aus sichtbare Seite (6) aufweist.

8. Kapillar-Tiefenmesser (1) nach Anspruch 7, wobei der Boden (3) und die Reflexionsfläche (4) einen Winkel (β) bilden, der im Bereich von 90 bis 120° liegt.

9. Kapillar-Tiefenmesser (1) nach einem der vorhergehenden Ansprüche, umfassend eine Mehrzahl von Kapillarrohren, die nebeneinander angeordnet sind.

10. Uhr, umfassend ein Tiefenmesser (1) nach einem der Ansprüche 1 bis 9.

11. Uhr nach Anspruch 10, wobei der Tiefenmesser am Umfang des Gehäuses (13) angeordnet ist und eine Öffnung (7) in Fluidverbindung mit dem umgebenden Medium besitzt.

## Claims

1. Capillary depth gauge (1) including at least one capillary tube (2) of triangular section comprising at least one portion made of a transparent material, said tube being arranged against a background (3) opposite an observation surface (5), said background being visible by transparency from the observation surface when the tubular section is substantially filled with water, **characterised in that** it comprises at least one reflection surface (4) arranged outside of said tube, visible by reflection from said observation surface (5) when the tubular section is substantially filled with air, **in that** said capillary tube (2) forms an isosceles triangle whose equal angles (α) have an angular value of between 48 and 60 degrees, **in that** the base of the isosceles triangle is arranged on the background, and **in that** said at least one reflection surface (4) is arranged opposite at least one of the two sides of said isosceles triangle and **in that** the isosceles triangle is arranged with respect to the background so that the light coming from the reflection surfaces (4) is reflected from one side of the isosceles triangle to the observer at the interface between the transparent portion of the capillary and the inside of said capillary when said capillary is filled with air.

2. Capillary depth gauge (1) according to claim 1, wherein the angle (α) has a value of between 50 and 55 degrees.

3. Capillary depth gauge (1) according to claim 2, wherein the angle (α) is equal to 50 degrees.

4. Capillary depth gauge (1) according to any of claims 1 to 3 wherein the narrowest surface of the tube has a width substantially less than 1.5 mm.

5. Capillary depth gauge (1) according to any of claims 1 to 4, wherein the capillary tube (2) is arranged to present two active sides (6) visible from the observation surface (5).

6. Capillary depth gauge (1) according to any of claims 1 to 5, wherein the background (3) and the reflection surface (4) form an angle corresponding substantially to 90 degrees.

7. Capillary depth gauge (1) according to any of claims 1 to 4, wherein the capillary tube (2) is arranged to present a single side (6) visible from the observation surface (5).

8. Capillary depth gauge (1) according to claim 7, wherein the background (3) and the reflection surface (4) form an angle (β) between 90 and 120 degrees.

9. Capillary depth gauge (1) according to any of the preceding claims including a plurality of capillary tubes arranged side by side.

10. Watch including a depth gauge (1) according to any of claims 1 to 9.

11. Watch according to claim 10, wherein the depth gauge is arranged on the periphery of the watch case (13) and has an aperture (7) in liquid communication with the ambient environment.
